# EUROPÄISCHE PATENTSCHRIFT

(11) **EP 0 780 605 B1**
(45) Veröffentlichungstag und Bekanntmachung des Hinweises auf die Patenterteilung: **28.02.2001**
(21) Anmeldenummer: 96119423.0
(22) Anmeldetag: 04.12.1996
(51) Int. Cl.: F16J 15/20

(54) **Verfahren zur Herstellung von Dichtungsringen aus Blähgraphit**
Process for producing sealing rings of expanded graphite
Procédé de fabrication d'anneaux d'étanchéité en graphite expansé

(30) Priorität: 20.12.1995 DE 19547711
(43) Veröffentlichungstag der Anmeldung: 25.06.1997
(73) Patentinhaber: Klinger AG, CH-6304 Zug (CH)
(72) Erfinder: Pärr, Helmut, 2351 Wiener Neudorf (AT)
(74) Vertreter: Röhl, Wolf Horst, Dipl.-Phys., Dr.

(56) Entgegenhaltungen:
- EP-A- 0 027 535
- EP-A- 0 334 589
- EP-A- 0 388 481
- DE-A- 2 441 602
- DE-A- 4 125 647
- DE-A- 4 228 073
- US-A- 4 042 747

## Beschreibung

Die Erfindung betrifft ein Verfahren zur Herstellung von Dichtungsringen aus Blähgraphit.

Das Reibverhalten derartiger Dichtungsringe aus Blähgraphit ist dann wichtig, wenn nach Art von Stopfbüchsringen am Außen- oder Innenmantel eine Relativbewegung zu einer zugeordneten zylindrischen Dichtfläche auftritt. Blähgraphit hat nämlich neben vielen für solche Dichtungsringe günstigen Eigenschaften - wie gleichbleibende Elastizität über einen weiten Temperaturbereich - den Nachteil, daß bei Fehlen von Feuchtigkeit große Reibkräfte auftreten, die außerdem zu vorzeitigem Verschleiß und damit zu Undichtheiten führen.

Es wurde bereits versucht, das Reibverhalten bei solchen Betriebszuständen dadurch zu verbessern, daß man mindestens an einer Stirnfläche einen zusätzlichen Ring aus PTFE (Polytetrafluorethylen) vorsah, der bei der Relativbewegung auf der zugeordneten Dichtfläche PTFE-Teilchen verteilte und außerdem als Abstreifring für an der Dichtfläche haftende Graphitteilchen diente. Diese Ausführungsform hat den Nachteil, daß die geringe Temperaturstandfestigkeit von PTFE bezüglich dieses zusätzlichen Rings voll wirksam ist und daher die Temperaturbegrenzung des PTFE für den genannten Dichtungsring wirksam wird.

Weiter ist aus der EP-A-0 334 589 ein Verfahren zur Herstellung von Dichtungsringen bekannt, welches folgende Schritte aufweist: auf einen porösen Ring aus Blähgraphit mit einer Anfangsdichte PTFE Teilchen sprühen, dann Trocknen und Nach Komprimieren, so daß die Enddichte erreicht wird.

Aufgabe der Erfindung ist es, ein Verfahren zur Herstellung von Dichtungsringen aus Blähgraphit zu schaffen, mit dem sich Dichtungsringe mit verbessertem Reibungsverhalten herstellen lassen.

Diese Aufgabe wird entsprechend dem kennzeichnenden Teil des Anspruchs 1 gelöst. Hierdurch werden PTFE-Teilchen mindestens über die der Gleitbewegung ausgesetzten Flächen des Dichtungsringes verteilt vorgesehen. Die PTFE-Teilchen, deren Größe im µm-Bereich (vorzugsweise wird eine mittlere Teilchengröße von 2-10 µm verwendet) liegt, sind nun über die gesamte Gleitfläche wirksam und fließen infolge ihrer Kleinheit auch bei höheren Temperaturen nicht weg.

Um die PTFE-Teilchen auf der Gleitfläche verteilt zu halten, müssen sie dort gut verankert werden. Dies wird dadurch erreicht, daß ein poröser Dichtungsring vorbestimmter Anfangsdichte hergestellt, mit einer PTFE-Dispersion getränkt, danach getrocknet und anschließend zur gewünschten Enddichte komprimiert wird, wobei während des Tränkens mit der PTFE-Dispersion ein elektrisches Feld zwischen dieser und dem Dichtungsring angelegt wird. Infolge der Porosität des Dichtungsringes während des Tränkvorgangs und des angelegten elektrischen Feldes setzen sich die von der Blähgraphitfläche angezogenen Teilchen in deren Poren ab und werden dort später während der in einer Form vorgenommenen Kompression zur gewünschten Enddichte in der Oberfläche fest verankert. Auch oberflächlich anhaftende PTFE-Teilchen werden beim Komprimieren in die Oberfläche des Dichtungsringes eingepreßt.

Weitere Merkmale der Erfindung sind den Unteransprüchen zu entnehmen.

Die Erfindung wird nun anhand eines Beispiels näher erläutert, wobei in einem beigefügten Diagramm das Reibungsverhalten von unterschiedlich behandelten Dichtungsringen aus Blähgraphit dargestellt ist.

Zunächst werden aus einer Blähgraphitfolie vorbestimmter Dichte Dichtungsringe ausgestanzt. Da in einer durch Walzen entstandenen Blähgraphitfolie die Blähgraphitteilchen mit ihrer Längserstreckung im wesentlichen in der Folienebene ausgerichtet sind, werden diese durch das Ausstanzen senkrecht zu ihrer Längserstreckung durchtrennt und führen zusammen mit der relativ geringen Dichte der Blähgraphitfolie dazu, daß an den Schnittflächen, d.h. der äußeren und inneren Umfangsrandfläche, die beim Einsatz des späteren Dichtungsrings die Dichtflächen mit verminderten Reibbeiwert bilden, eine starke Porosität vorhanden ist.

Zur Imprägnierung von porösen Dichtungsringen aus Blähgraphit wird eine PTFE-Dispersion, vorzugsweise mit einer Dichte etwa zwischen 1,3 und 1,4 g/cm³, in einen oben offenen Kunststoffbehälter gefüllt, der seinerseits in einem Metallbehälter angeordnet ist. Die zu imprägnierenden Dichtungsringe werden in einen metallischen Korb gefüllt, der dann in den Kunststoffbehälter mit der PTFE-Dispersion eingetaucht wird. Zwischen dem geerdeten Metallbehälter und dem Korb wird eine Gleichspannung angelegt, so daß sich beim Tauchvorgang die PTFE-Teilchen aus der Dispersion an die Oberfläche der Dichtungsringe anlegen und ferner infolge Porosität der Dichtungsringe in die Hohlräume der Oberfläche eindringen. Die Gleichspannung kann beispielsweise etwa 0,2 - 4 V betragen, wobei diese von der Größe und Form der gesamten Behandlungseinrichtung abhängig ist.

Die unbehandelten Dichtungsringe haben zweckmäßigerweise eine Dichte von minimal 1 g/cm³, vorzugsweise eine Dichte von etwa 1,3 g/cm³. Zweckmäßigerweise hat der anfänglich poröse Dichtungsring eine Anfangsdichte von maximal 90% seiner Enddichte. Bei der nach Trocknung anschließenden Kompression in einer geschlossenen Form werden die PTFE-Teilchen, soweit sie in Oberflächenhohlräumen insbesondere an den Umfangsrandflächen, d.h. den späteren Dichtflächen, festsitzen, in diesen Hohlräumen verankert bzw. sofern sie an der Oberfläche sitzen, in diese eingepreßt. Auf diese Weise erhält man Dichtungsringe, etwa Stopfbüchs-Dichtungsringe einer Dichte, die vorzugsweise maximal etwa 2 g/cm³ beträgt. Insbesondere wird an den Dichtflächen ein Reibbeiwert von höchstens 0,1 erreicht.

Das beigefügte Diagramm zeigt das Betriebsverhalten von hohlzylindrischen Dichtungsringen in der Dimension 70 x 50 mm mit einer Höhe von 14 mm, die aufgrund eines Formpreßvorgangs eine Enddichte von 1,7 g/cm³ aufweisen und in einem Gehäuse unter einer Pressung von 25 N/mm² angeordnet sind, wobei ein kolbenartiges Teil in die Innenbohrung (50 mm Durchmesser) des Dichtungsringes mit einem Übermaß von 0,04 mm eingesetzt ist und dort mit einer Geschwindigkeit von 500 mm/min in einer Stickstoffatmosphäre hin- und herbewegt wird.

Bei einem unimprägnierten Dichtungsring ist die Anfangsreibkraft sehr groß und nimmt dann infolge von Graphitabrieb stetig ab (Kurve a), worunter natürlich die Dichtheit leidet. Setzt man einen bereits fertig komprimierten Dichtungsring einer Imprägnierung aus, so ist zwar die Reibkraft anfangs sehr niedrig (Kurve b), doch haften die PTFE-Teilchen nur sehr gering an der Oberfläche, so daß die Reibkraft zunächst ansteigt und schließlich infolge Verschleißes wie bei Kurve a) bei steigender Undichtheit absinkt. Beim erfindungsgemäßen Dichtungsring ist die Reibkraft schon zu Beginn der Betätigungen am niedrigsten (Kurve c), die außerdem mit steigender Anzahl der 3etätigungen infolge Glättung und Übertragung von PTFE-Teilchen auf die zugeordnete Dichtfläche noch absinkt, ohne daß sich die Dichtheit verändert.

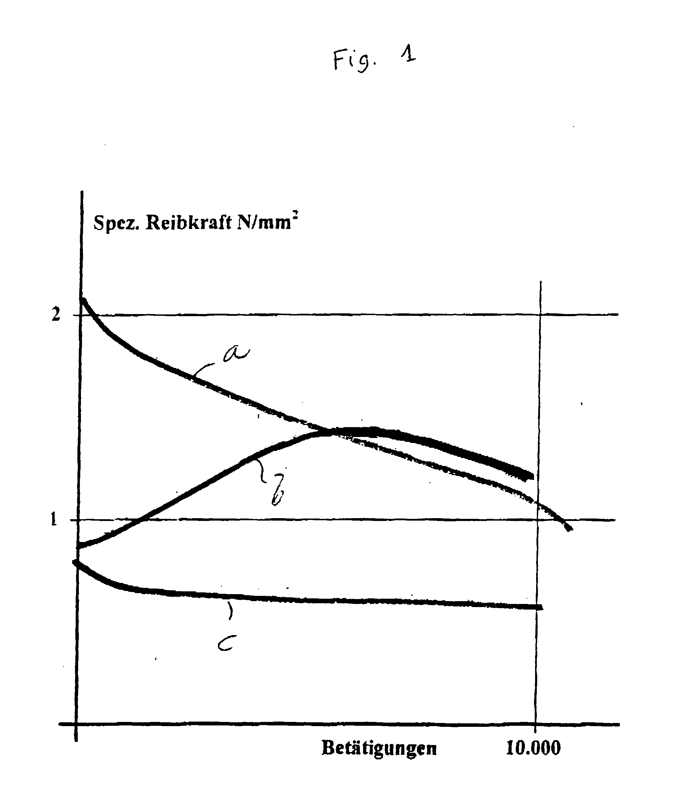

## Patentansprüche

1. Verfahren zur Herstellung von Dichtungsringen aus Blähgraphit, mit folgenden Verfahrens schritten: ein poröser Dichtungsring vorbestimmter Anfangsdichte wird hergestellt, mit einer PTFE-Dispersion getränkt, danach getrocknet und anschließend zur gewünschten Enddichte komprimiert, wobei während des Tränkens mit der PTFE-Dispersion deren PTFE-Teilchen mittels eines elektrisches Feldes zum Dichtungsring bewegt werden.

2. Verfahren nach Anspruch 1, dadurch gekennzeichnet, daß der poröse Dichtungsring mit einer Anfangsdichte von minimal 1 g/cm³, vorzugsweise etwa 1,3 g/cm³ hergestellt wird.

3. Verfahren nach Anspruch 1 oder 2, dadurch gekennzeichnet, daß der poröse Dichtungsring mit einer Anfangsdichte von maximal 90% der Enddichte hergestellt wird.

4. Verfahren nach einem der Ansprüche 1 bis 3, dadurch gekennzeichnet, daß der poröse Dichtungsring durch Ausstanzen aus einer Blähgraphitfolie hergestellt wird.

5. Verfahren nach einem der Ansprüche 1 bis 4, dadurch gekennzeichnet, daß der getränkte, getrocknete Dichtungsring auf eine Enddichte von maximal 2 g/cm³ komprimiert wird.

6. Verfahren nach einem der Ansprüche 1 bis 5, dadurch gekennzeichnet, daß eine PTFE-Dispersion mit einer Dichte etwa zwischen 1,3 und 1,4 g/cm³ verwendet wird.

7. Verfahren nach einem der Ansprüche 1 bis 6, dadurch gekennzeichnet, daß eine PTFE-Dispersion mit PTFE-Teilchen einer mittleren Teilchengröße von etwa 2 bis 10 µm verwendet wird.

8. Verfahren nach einem der Ansprüche 1 bis 6, dadurch gekennzeichnet, daß oberflächlich anhaftende PTFE-Teilchen beim Komprimieren in die Oberfläche des Dichtungsrings eingepreßt werden.

9. Dichtungsring aus Blähgraphit mit einer vorbestimmten Dichte, dessen oberflächennahe Poren mit PTFE-Teilchen gefüllt sind und der einen Reibbeiwert von höchstens 0,1 aufweist.

## Claims

1. Procedure for the manufacture of sealing rings made of expanded graphite with the following procedure steps: A porous sealing ring of a pre-determined original density is manufactured, impregnated with a PTFE dispersion, then dried and finally compressed to the desired final density, while during the impregnation with the PTFE dispersion the PTFE particles thereof are moved by means of an electrical field towards the sealing ring.

2. Procedure according to claim 1, characterised by the fact that the porous sealing ring is manufactured with an initial density of at least 1 g/cc, preferably about 1.3 g/cc.

3. Procedure according to claim 1 or 2, characterised by the fact that the porous sealing ring is manufactured with an initial density of not more than 90% of the final density.

4. Procedure according to any of claims 1 to 3, characterised by the fact that the porous sealing ring is manufactured by being punched out of a sheet of expanded graphite.

5. Procedure according to any of claims 1 to 4, characterised by the fact that the impregnated, dried sealing ring is compressed to a final density not exceeding 2 g/cc.

6. Procedure according to any of claims 1 to 5, characterised by the fact that a PTFE dispersion with a density approx. between 1.3 and 1.4 g/cc is used.

7. Procedure according to any of claims 1 to 6, characterised by the fact that a PTFE dispersion with PTFE particles of an average particle size of some 2 to 10µm is used.

8. Procedure according to any of claims 1 to 6, characterised by the fact that PTFE particles adhering to the surface are pressed into the surface of the sealing ring during compression.

9. Sealing ring made of expanded graphite of a pre-determined density, whose pores close to the surface are filled with PTFE particles and which displays a coefficient of friction not exceeding 0.1.

## Revendications

1. Procédé de fabrication de bagues d'étanchéité en graphite soufflé, comprenant les étapes de procédé suivantes : on fabrique une bague d'étanchéité poreuse possédant une densité initiale prédéterminée, on l'imprègne d'une dispersion de PTFE, puis on la sèche et, ensuite, on la comprime à la densité finale souhaitée cependant que, pendant l'imprégnation avec la dispersion de PTFE, on met les particules de PTFE de cette dispersion en mouvement vers la bague d'étanchéité au moyen d'un champ électrique.

2. Procédé selon la revendication 1, caractérisé en ce qu'on fabrique la bague d'étanchéité poreuse avec une densité initiale de 1 g/cm³ au minimum, de préférence d'environ 1, 3 g/cm³

3. Procédé selon la revendication 1 ou 2, caractérisé en ce qu'on fabrique la bague d'étanchéité poreuse avec une densité initiale au maximum égale à 90% de la densité finale.

4. Procédé selon l'une des revendications 1 à 3, caractérisé en ce qu'on fabrique la bague d'étanchéité poreuse par découpage dans une feuille de graphite soufflé.

5. Procédé selon l'une des revendications 1 à 4, caractérisé en ce qu'on comprime la bague d'étanchéité imprégnée, séchée, à une densité finale de 2 g/cm³ au maximum.

6. Procédé selon l'une des revendications 1 à 5, caractérisé en ce qu'on utilise une dispersion de PTFE ayant une densité comprise sensiblement entre 1,3 et 1,4 g/cm³.

7. Procédé selon l'une des revendications 1 à 6, caractérisé en ce qu'on utilise une dispersion de PTFE possédant des particules de PTFE ayant une taille moyenne de particules d'environ 2 à 10 µm.

8. Procédé selon l'une des revendications 1 à 6, caractérisé en ce que, lors de la compression, on fait pénétrer les particules de PTFE qui adhérent superficiellement dans la surface de la bague d'étanchéité.

9. Bague d'étanchéité en graphite soufflé possédant une densité prédéterminée, dont les pores proches de la surface sont remplis de particules de PTFE et qui présente un coefficient de frottement de 0,1 au maximum.
